# EUROPEAN PATENT APPLICATION

(11) **EP 1 502 504 A1**
(43) Date of publication of application: **02.02.2005**
(21) Application number: 04103429.9
(22) Date of filing: 19.07.2004
(51) Int. Cl.: A01K 87/00

(54) **Fishing-rod and method of fabrication thereof**

(30) Priority: 31.07.2003 IT PN20030045
(71) Applicant: TRIANA s.r.l., 33084 Cordenons (Pordenone) (IT)
(72) Inventor: ONOFRI, Paolo, 33084, Cordenons (PN) (IT)
(74) Representative: Giugni, Valter

(57) **Abstract**

Method for fabricating a fishing-rod made of at least a layer of fibres (11) that are preimpregnated with a successively cured thermosetting resin. The method comprises a single impregnation and surface finishing step, since it makes use of a resin that is enriched with metal particles, in particular aluminium particles, in advance.

The method provides a fishing-rod that is particularly advantageous and low-cost and, in addition, has a unique "birch bark" finishing effect.

## Description

The present invention refers to an improved fishing-rod and the method of fabrication thereof.

Modern fishing-rods are currently manufactured by means of methods that substantially involve one or more layers made of fibres being wound under tension and then impregnated with thermosetting resins. Preferably, the fibres that are used in these methods are constituted by non-woven materials such as kevlar™, polyester, glass fibres, carbon fibres. The fibre layers may be preimpregnated with resin and the thus obtained fishing-rod may be finished in a variety of manners, e.g. paint-coated.

Fishing-rods made and manufactured according to current techniques as described above are disclosed, for instance, in US 4,821,447 and US 5,964,056.

Known in the art are also fishing-rods that are manufactured by depositing layer of aluminium particles, or particles of a similar metal material, onto a dry fibreglass fabric, while subsequently submitting the so obtained assembly to impregnation with thermosetting resins. However, such solution seems to be rather complicated and most likely to cause the overall weight of the fishing-rod to increase considerably. It is in fact for this reason that it is used in a limited manner to only make just a few particular sections of the fishing-rod, in particular the grip portion.

Furthermore, a fishing-rod usually requires its outer surface to be finished by some appropriate surface-finishing treatment that is necessary for both technical and aesthetical reasons.

From a technical point of view, the fishing-rod must in fact comply with conflicting requirements. On the one side, it must be lightweight altogether, but strong. It must also be rather rigid in the rear grip portion, but adequately flexible towards the end portion from which there extends the fishing-line. In addition, the surface of the fishing-rod must be as smooth as possible, while at the same time ensuring a firm grip for the hand of the fisher.

From an aesthetical point of view, fishing-rods manufactured with the use of fibres are usually black in colour and, therefore, are subject to heating up when exposed to sunlight. As a result, in order to do away with this drawback, or reduce the effect thereof, fishing-rods are suitably coloured. Usually, such colouring is done by painting or by depositing metal particles onto the fibres. However, the application of an additional, albeit very thin layer has the effect of adding weight to the fishing-rod. Furthermore, such surface-finishing process constitutes an additional manufacturing step that does not fail to lengthen production time and increase production costs.

It therefore is a main object of the present invention to provide an improved fishing-rod which, further to the required lightweight and strength properties, is also provided with a superior-quality surface finish obtained with a simple and low-cost method.

According to the present invention, this aim is reached in a fishing-rod that is manufactured out of a carbon-fibre ribbon that is impregnated with thermosetting resin, to which there have been added and mixed aluminium particles, as this is recited in the appended claims.

Features and advantages of the present invention will anyway be more readily understood from the description that is given below by way of nonlimiting example with reference to the accompanying drawings, in which:
- Figure 1 is a longitudinal perspective view of a section of a fishing-rod according to the present invention;
- Figure 2 is a schematical cross-sectional view of the fishing-rod section illustrated in Figure 1, as viewed along a transversal plane; and
- Figure 3 is a partial cross-sectional view along an axial plane of the fishing-rod section illustrated in Figure 1.

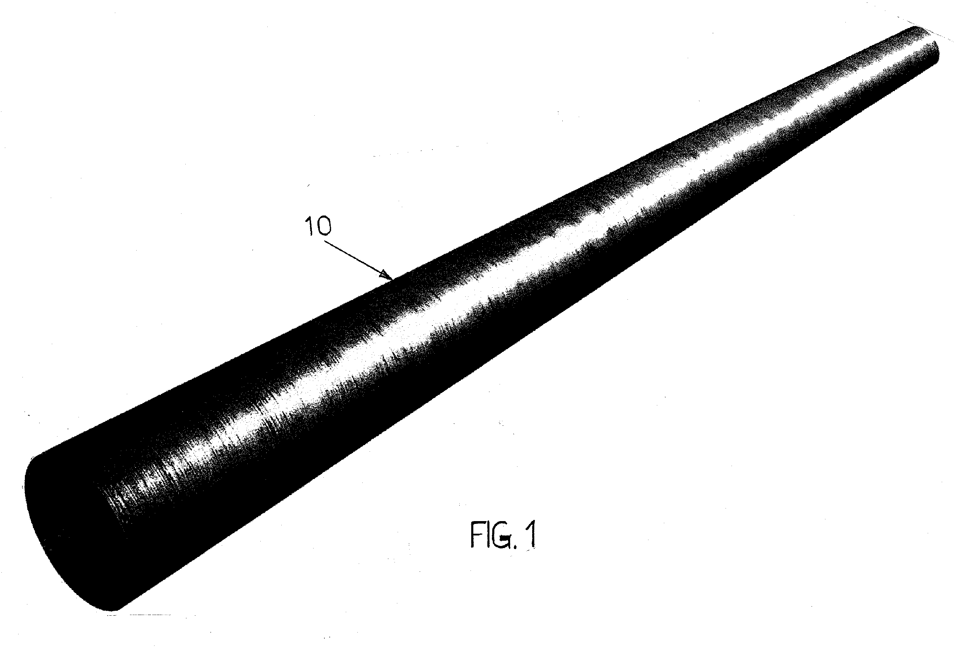

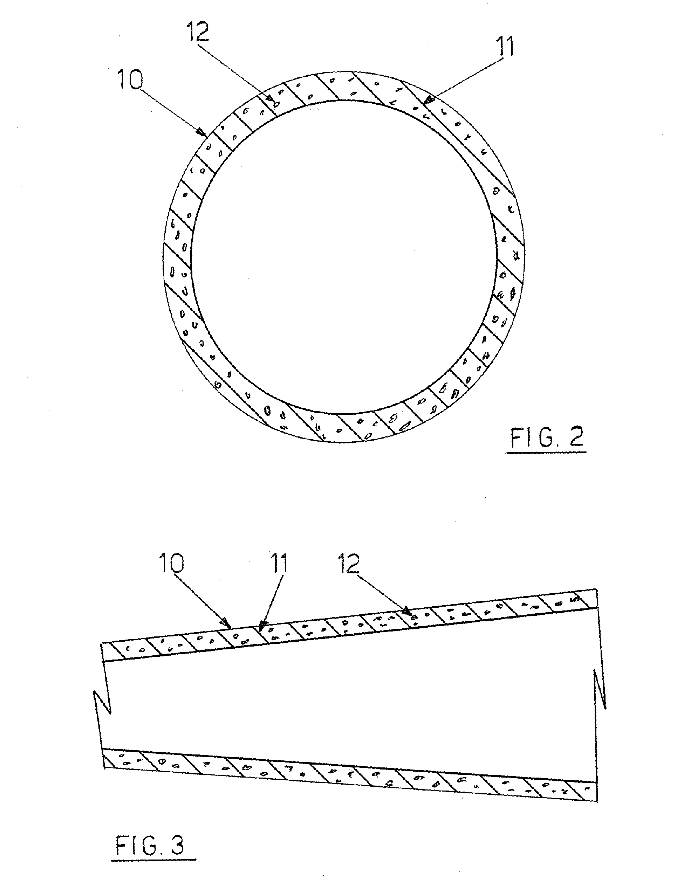

A fishing-rod according to the present invention is essentially comprised of one or more tubular sections 10 (Figure 1), each one of which is made by tightly winding at least a layer of carbon fibres 11, which are preimpregnated with thermosetting resin, on a rod-shaped core, so as to form the tubular section. The tubular section is usually tapered, so as to enable several sections to be fitted into each other in a sequence to provide a fishing-rod of any desired length (Figures 2 and 3).

For the impregnation of the carbon fibres use is made of a thermosetting resin, in which there have been mixed metal particles 12, in particular aluminium particles, and which is applied onto the carbon fibres, thereby bringing about a covering that - intentionally - does not feature any perfectly homogeneous appearance. The result, in fact, is a rod, the outer surface of which features a so-called "birch bark" aesthetical effect, that is a light colouring with typical streaks of a darker colour that calls the appearance of the trunk of a birch-tree to the mind.

Finally, the thus provided tubular section is submitted to a heat treatment of a traditional kind aimed at curing the thermosetting resin.

The fishing rod obtained with the afore-described fabrication method fully meets the necessary lightweight and strength requirements, owing mainly to the fact that only a limited amount of aluminium particles is added, actually, and these aluminium particles are directly incorporated in the resin used to impregnation purposes. Furthermore, a fishing-rod of this kind shows a metallic finish that constitutes a unique easthetical feature that is highly valued in sports and leisure tools. This light metallic colouring further enables the fishing-rod to be prevented to heat up to any significant extent when exposed to sun rays, thereby making it much more comfortable and convenient to handle (Figure 1).

Accordingly, the fishing-rod obtained with the afore-described fabrication method is particularly advantageous and low-cost, since the impregnation and surface finishing operations are both performed within a single processing step, using resin enriched with metal particles, in particular aluminium particles.

## Claims

1. Method for fabricating a fishing-rod, or similar sports tool, comprising substantially the steps of
- tightly winding at least a layer of fibres (11), which are possibly preimpregnated with a thermosetting resin, on a rod-shaped core, so as to form at least a tubular section (10);
- impregnating the fibres of the thus formed tubular section with an amount of thermosetting resin;
- submitting the resulting resin-impregnated tubular section to a heat treatment for curing the thermosetting resin;
the method being **characterized in that** the fibres (11) used are carbon fibres in form of a ribbon, and that the impregnation resin is mixed with metal particles (12).

2. Method according to claim 1, **characterized in that** the metal particles (12) are aluminium particles.

3. Method according to claim 1 or 2, **characterized in that** the tubular section (10) is tapered to enable several sections to be fitted into each other in a sequence to provide a fishing-rod of the desired length.

4. Fishing-rod, or similar sports tool, substantially constituted by at least a tubular section (10) manufactured with the use of tightly wound fibres (11) impregnated with a thermosetting resin, **characterized in that** the fibres (11) used are carbon fibres in form of a ribbon, and that the impregnation resin is mixed with metal particles (12).

5. Fishing-rod according to claim 3, **characterized in that** the metal particles (12) are aluminium particles.

6. Fishing-rod according to claim 3, **characterized in that** the tubular section (10) is tapered to enable several sections to be fitted into each other in a sequence to provide a fishing-rod of the desired length.
